# EUROPÄISCHE PATENTSCHRIFT

(11) **EP 3 408 970 B1**
(45) Veröffentlichungstag und Bekanntmachung des Hinweises auf die Patenterteilung: **28.07.2021**
(21) Anmeldenummer: 18718151.6
(22) Anmeldetag: 17.04.2018
(51) Int. Cl.: H04L 12/24, H04L 12/26

(54) **VERFAHREN ZUR ERFASSUNG UND BESTIMMUNG EINER AUSFALLWAHRSCHEINLICHKEIT EINES FUNKNETZWERKES UND ZENTRALRECHNER**
METHOD FOR DETECTING AND DETERMINING A FAILURE PROBABILITY OF A RADIO NETWORK AND CENTRAL COMPUTER
PROCÉDÉ DE DÉTECTION ET DE DÉTERMINATION DE LA PROBABILITÉ DE DÉFAUT D'UN RÉSEAU RADIO ET ORDINATEUR CENTRAL

(30) Priorität: 20.04.2017 DE 102017206631
(43) Veröffentlichungstag der Anmeldung: 05.12.2018
(73) Patentinhaber: AUDI AG, 85045 Ingolstadt (DE)
(72) Erfinder: GILSDORF, Tim, 74388 Talheim (DE); MÜNCH, Bertram, 74172 Neckarsulm (DE); WOLF, Christian, 71499 Untergruppenbach (DE); HÄFFNER, Michael, 74348 Lauffen (DE)
(86) Internationale Anmeldenummer: PCT/EP2018/059701
(87) Internationale Veröffentlichungsnummer: WO 2018/192889

(56) Entgegenhaltungen:
- WO-A1-2007/048738
- US-A1- 2001 047 416

## Beschreibung

Die Erfindung betrifft ein Verfahren zur Erfassung und Bestimmung einer Ausfallwahrscheinlichkeit eines Funknetzwerkes und einen zur Durchführung des Verfahrens eingerichteten Zentralrechner. Insbesondere ist ein WLAN-Netzwerk (WLAN - Wireless Local Area Network) gemeint.

Umfangreiche Funknetzwerkinfrastrukturen, welche mehrere Zugangspunkte umfassen und für eine Vielzahl von Endgeräten vorgesehen sind, erfordern eine besondere Auslegung und Überwachung hinsichtlich ihrer Zuverlässigkeit. Fehler bei der Auslegung oder eine Überlastung der Netzwerkinfrastruktur können zu Funktionseinschränkungen oder einem kompletten Ausfall des Funknetzwerkes führen. Insbesondere in Industrieanlagen, deren Komponenten über Funknetzwerke kommunizieren, können Ausfälle eines Funknetzwerkes zu einer Unterbrechung des Produktionsvorgangs führen, welche mit hohen wirtschaftlichen Schäden verbunden sein kann.

Um die Zuverlässigkeit von Funknetzen sicherstellen zu können, wurden Verfahren und Vorrichtungen entwickelt, welche die Planung und Regelung einer Funknetzwerkinfrastruktur optimieren können.

In der DE 10 2006 016 800 A1 ist ein messtechnisch unterstütztes iteratives Verfahren zum Zweck des Aufbaus eines optimalen drahtlosen Netzwerks in einem Gebäude mithilfe eines 3D-Modells dieses Gebäudes und empirischer Modelle zur Ermittlung der relevanten Performanceparameter beschrieben. Im Rahmen des Verfahrens wird die Anordnung von WLAN Access Points in einem Gebäude mittels eines 3-D Modells und experimentell gesammelter Daten optimiert. In einer Weiterbildung des Verfahrens ist es dabei vorgesehen, die experimentellen Daten auch im realen Datenverkehr wiederholt und iterativ zu erfassen.

In der US 2002/0168993 A1 wird eine Pfadverlustschätzung zur Leistung Steuerung und Verbindungsanpassung für ein IEEE 802.11h WLAN beschrieben. Im Rahmen des Verfahrens wird der Pfadverlust zwischen einem Empfänger und einem Sender gemessen und basierend auf den Ergebnissen dieser Messung eine Leistungs- und Verbindungsanpassung für den Empfänger vorgenommen.

In der DE 10 2015 204 246 A1 werden eine Vorrichtung und ein Verfahren zur Leistungsanpassung eines WLAN-Netzwerkes beschrieben. Dabei wird die Sendeleistung eines WLAN-Moduls derart angepasst, dass die empfangene Signalstärke an einem Referenz-WLAN-Modul kleiner als ein vorgegebener Schwellwert ist.

In der US 2016/0057639 A1 wird ein Verfahren zur dynamischen Bereitstellung von Echtzeitdiensten für ein mobiles Gerät in einem dezentralen drahtlosen Netzwerk beschrieben. Dabei werden ein Empfangsgebiet und eine Wahrscheinlichkeit für ein Auftreten eines Netzwerkfehlers in dem Empfangsgebiet prognostiziert.

In der US 9 531 522 B2 wird ein Verfahren zur vorausschauenden Ressourcenzuteilung in einem Netzwerk beschrieben. Dabei wird einer Anfrage eines Geräts in dem Netzwerk ein Zeitfenster zur Beantwortung der Anfrage zugewiesen.

In der US 2015/0148040 A1 wird ein Anomaliekorrelationsmechanismus zur Analyse von Übergabevorgängen in einem Kommunikationsnetz beschrieben. Dabei werden Zeitreihen, welche Fehler bei Übergabevorgängen zwischen Funkzellen betreffen, ausgewertet.

In der US 2001/0047416 A1 sind ein Netzwerkverwaltungssystem und ein Verfahren zum Umordnen von Netzwerkressourcen offenbart. Eine Netzwerkverwaltung des Netzwerkverwaltungssystems umfasst Funktionen um eine Ausfallwahrscheinlichkeit in einer Zelle, in welcher Netzwerkressourcen angeordnet wurden, abzuschätzen. Die Netzwerkverwaltung ist dazu eingerichtet, die Umordnung der Netzwerkressourcen zu wiederholen, um die Ausfallwahrscheinlichkeit zu minimieren. Dabei wird die Ausfallwahrscheinlichkeit auf Grundlage von Daten früherer Zellen berechnet.

In der WO 2007/048738 A1 ist ein Clustering-Verfahren für eine Ausfallvorhersage eines Softwareservers offenbart. In dem Verfahren ist es vorgesehen, dass Echtzeitstatistiken des Servers gesammelt werden und auf Grundlage eines Verhältnisses der Echtzeitstatistiken zu Profilen, eine Ausfallwahrscheinlichkeit des Servers bestimmt wird.

In den genannten Erfindungen werden Verfahren beschrieben, welche eine Planung eines Funknetzwerkes beschreiben oder Leistungsanpassungen zur Sicherstellung eines Funknetzwerkbetriebs ermöglichen. In einem Funknetzwerk, welches eine Vielzahl von Teilnehmern umfasst, lässt sich unter Umständen der Betrieb nicht mittels einer Anpassung von Sendeleistungen alleine aufrechterhalten. In solchen Fällen ist es notwendig, vor einem drohenden Ausfall geeignete Maßnahmen treffen zu können, um den Betrieb des Funknetzwerkes noch sicherstellen zu können.

Es ist eine Aufgabe der Erfindung, ein Verfahren bereitzustellen, welches es ermöglicht, die Auslastung eines Funknetzwerkes zu bestimmen.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figur offenbart.

Durch die Erfindung wird ein Verfahren zur Erfassung und Bestimmung einer Ausfallwahrscheinlichkeit eines Funknetzwerkes bereitgestellt. Dabei ist es vorgesehen, dass durch Geräte des Funknetzwerkes zyklisch Betriebsparameter an einen Zentralrechner übermittelt werden, wobei jeder übermittelte Betriebsparameter einen Betriebswert des jeweiligen Gerätes und einen Erfassungszeitpunkt des Betriebswerts umfasst. Der Zentralrechner speichert zyklisch die innerhalb eines jeweils vorgegebenen Zeitintervall erfassten Betriebswerte aller Betriebsparameter als jeweilige Betriebskonstellation ab. Der Zentralrechner erstellt zyklisch auf Grundlage der gespeicherten Betriebskonstellationen ein Modell, welches jeder möglichen Betriebskonstellation eine Ausfallwahrscheinlichkeit zuordnet. Mit anderen Worten übermitteln die Geräte des Funknetzwerkes regelmäßig Betriebsparameter, welche jeweils einen Betriebswert und einen Erfassungszeitpunkt umfassen, an einen Zentralrechner. Die innerhalb eines bestimmten Zeitintervalls erfassten Werte werden dabei zusammengefasst und als eine jeweilige Betriebskonstellation gespeichert. Diese sind über einen Zugang zum Zentralrechner jederzeit einsehbar. Der Zentralrechner prüft das Funknetzwerk auf ein Vorliegen eines Ausfalls in dem bestimmten Zeitintervall. Die gespeicherten Betriebskonstellationen und erkannte Ausfälle werden durch den Zentralrechner zur Erstellung eines Modells benutzt, welches jeder möglichen Betriebskonstellation eine Ausfallwahrscheinlichkeit zuordnet. Ein Wahrscheinlichkeitswert kann sich z.B. ergeben, indem man zählt, wie oft bei einer gegebenen Betriebskonstellation ein Ausfall vorlag. Das Verhältnis aus gezählten Ausfällen zur Gesamtanzahl der Beobachtungen dieser Betriebskonstellation ergibt eine Wahrscheinlichkeit. Ein Ausfall kann z.B. darin bestehen, dass zumindest eines der Geräte vom Funknetzwerk getrennt oder abgeschnitten war.

Bei einem Funknetzwerk kann es sich beispielsweise um ein WLAN-Netzwerk handeln. Geräte des Funknetzwerkes umfassen Vermittlergeräte oder Infrastrukturgeräte, wozu beispielsweise Zugangspunkte und/oder Router und/oder Repeater gerechnet werden können, und Endgeräte wie beispielsweise Vorrichtungen mit einem zu dem Funknetzwerk kompatiblen Funkmodul.

Betriebsparameter können Parameter sein, welche einen Zustand eines Gerätes beschreiben und z.B. seine Anbindung an das Funknetzwerk betreffen. Ein Betriebsparameter umfasst einen Betriebswert und einen Erfassungszeitpunkt des Betriebswertes. Ein Betriebsparameter kann jeweils beispielsweise eine Sende- und/oder Empfangsleistung, die Anzahl der durch das jeweilige Gerät erkannten anderen Geräte des Funknetzwerkes, eine Übertragungsfrequenz, eine Anzahl der übertragenen, korrigierten, fehlerhaften oder empfangenen Pakete, Fehlermeldungen oder eine Signalqualität umfassen. Zu den Betriebsparametern, welche das Gerät selbst betreffen, können beispielsweise die Leistungsaufnahme, ein Betriebszustand, eine Systemversion oder die Temperatur oder seine Speicherauslastung oder eine geographische Position gehören. Ein Zentralrechner kann ein Server oder Rechner mit zumindest einem Mikroprozessor sein. Eine jeweilige Betriebskonstellation ist eine Zusammenstellung aller Betriebsparameter, welche gemäß ihrem Erfassungszeitpunkt in einem jeweils vorgegebenen Zeitintervall erfasst wurden und ist als Momentaufnahme des Funknetzwerkes in dem jeweiligen Zeitintervall zu verstehen. Ein Zeitintervall kann z.B. eine Zeitdauer von 1 min bis 1 h groß sein. Ein Ausfall des Funknetzwerkes ist ein Zustand des Funknetzwerkes, in welchem dieses eine vorbestimmte Funktionsweise nicht oder nicht mehr in einem vorbestimmten Umfang erfüllt. Darunter ist nicht nur ein kompletter Ausfall aller Geräte zu verstehen, sondern beispielsweise auch ein Zustand, in welchem beispielsweise ein einziges Gerät nicht in einem erforderlichen Umfang mit dem Funknetzwerk interagieren kann. Ein Modell kann beispielsweise ein mathematisches Modell sein, welches auf empirischen Erfahrungswerten beruht oder eine Simulation ist. Das Modell kann derart gestaltet sein, dass es für eine Betriebskonstellation eine Ausfallwahrscheinlichkeit ausgibt. Mit jeder weiteren gespeicherten Betriebskonstellation und einer Information über ein Vorliegen eines Ausfalls kann das Modell mit jedem Zyklus angepasst werden. Mit anderen Worten wird es iterativ verbessert. Das Modell kann nicht nur die Ausfallwahrscheinlichkeit einer realen Betriebskonstellation berechnen, sondern es kann auch mindestens einen Betriebsparameter und/oder eine Ausfallwahrscheinlichkeit für eine geänderte Betriebskonstellation ausgeben. Somit kann es möglich sein, das im Rahmen einer Verbesserungsmaßnahme die sich ergebene Empfangsleistung bei der Erweiterung des Funknetzwerkes um einen Repeater an einer bestimmten räumlichen Position prognostiziert werden kann. Es kann also für eine geplante Betriebskonstellation ebenfalls eine Ausfallwahrscheinlichkeit prognostiziert oder extrapoliert werden.

Es ist vorgesehen, dass der Zentralrechner zyklisch eine Wahrscheinlichkeit für ein Auftreten eines Ausfalls für jede neue gespeicherte Betriebskonstellation berechnet. Mit anderen Worten berechnet der Zentralrechner nach jeder erfolgten Übertragung einer Betriebskonstellation mittels des Modells die aktuell bestehende Ausfallwahrscheinlichkeit. Dadurch ergibt sich der Vorteil, dass ein Trend einer steigenden Ausfallwahrscheinlichkeit des Funknetzwerkes erkannt werden kann.

Die aktuelle Ausfallwahrscheinlichkeit wird mit einem vorbestimmten Warnschwellwert verglichen und eine Überschreitung des Warnschwellwertes führt zu einer Erzeugung eines Warnsignals. Mit anderen Worten kann ein Warnschwellwert bezüglich der Ausfallwahrscheinlichkeit bestimmt werden, dessen Überschreiten zu der Ausgabe eines Warnsignals führt. Beispielsweise kann bei einer berechneten Ausfallwahrscheinlichkeit über dem Warnschwellwert, z.B. 2%, ein Warnsignal in Form einer E-Mail durch den Zentralrechner übermittelt oder ausgesendet werden. Dadurch ergibt sich der Vorteil, dass eine Gegenmaßnahme eingeleitet werden kann, wenn die Ausfallwahrscheinlichkeit zu groß wird, d.h. über dem Warnschwellwert liegt.

Für jeden aktuellen Betriebsparameter wird eine Differenz ausgegeben, welche nach der Wahrscheinlichkeitsverteilung zu einer Überschreitung des Warnschwellwertes bei ansonsten gleich bleibenden übrigen Betriebswerten führen würde. Mit anderen Worten bestimmt der Zentralrechner für einen aktuellen Betriebswert eines Betriebsparameters die Differenz, welche zu einer Überschreitung des Warnschwellwertes führen würde. Dadurch ergibt sich der Vorteil, dass für einen Anwender ersichtlich ist, wie groß einzelne Reserven bei Betriebsparametern sind oder auf welche Werte zur Senkung der Ausfallwahrscheinlichkeit angepasst werden müssen. Somit können kritische Betriebsparameter ausfindig gemacht werden.

Eine Weiterbildung der Erfindung sieht vor, dass ein Ausfall zumindest ein Auftreten eines Indikationswertes zumindest eines Indikationsparameters in einem vorbestimmten Wertebereich umfasst. Ein Indikationsparameter kann einen Betriebsparameter umfassen, dessen Betriebswert eine Aussage über das Funktionieren des Funknetzwerkes darstellt. Dazu können beispielsweise die Empfangsleistung und/oder die Zahl der fehlerhaften empfangenen Pakete gehören. Der vorbestimmte Wertebereich kann derart gewählt sein, dass ein ordnungsgemäßes Funktionieren des Funknetzwerkes nicht mehr sichergestellt ist, wenn ein jeweiliger Indikationsparameter einen Indikationswert in diesem Wertebereich aufweist. Beispielsweise kann ein Ausfall als ein Unterschreiten einer bestimmten Empfangsleistung eines Geräts definiert sein.

Eine Weiterbildung der Erfindung sieht vor, dass das Modell zur Zuordnung einer Ausfallwahrscheinlichkeit durch eine Korrelation der Betriebskonstellationen mit den jeweils aufgetretenen Ausfällen mittels eines Mustererkennungsalgorithmus erzeugt wird. Mit anderen Worten werden die Betriebskonstellationen und die Ausfälle des Funknetzwerkes als Eingangswerte eines Mustererkennungsalgorithmus verwendet, welcher daraus ein Modell erstellt. Bei einem Mustererkennungsalgorithmus kann es sich um einen Programmcode eines Programms zur Auswertung großer Datenmengen (Big-Data-Tool) handeln. Insbesondere können dabei Methoden des maschinellen Lernens oder künstliche neuronale Netze verwendet werden. Dadurch ergibt sich der Vorteil, dass keine manuelle Definition kausaler Zusammenhänge erfolgen muss, welche aufgrund der Komplexität und des Umfangs der Datenmenge nicht durch einen Anwender erfasst werden kann. Der Algorithmus kann somit über Erkennung von Mustern zwischen Betriebskonstellationen und Ausfällen ein Modell für die Ausfallwahrscheinlichkeit erstellen. Eine Weiterbildung der Erfindung sieht vor, dass der Zentralrechner mittels Extrapolationsverfahren eine prognostizierte Betriebskonstellation bestimmt und bei einer Überschreitung des Warnschwellwertes bei der prognostizierten Betriebskonstellation ein Warnsignal erzeugt. Mit anderen Worten wird aus den gespeicherten Betriebskonstellationen eine Prognose oder ein Trend für eine Betriebskonstellation zu einem zukünftigen Zeitpunkt erstellt und ein Warnsignal generiert, wenn für die prognostizierte Betriebskonstellation eine Ausfallwahrscheinlichkeit berechnet wird, welche den Warnschwellwert übersteigt. In einem einfachen Beispiel kann eine über einen Zeitraum von Stunden konstant abnehmende Empfangsleistung linear extrapoliert werden und ein Warnsignal erstellt werden, wenn die Extrapolation für die nächste Stunde eine Betriebskonstellation prognostiziert, welche eine Ausfallwahrscheinlichkeit über der Warnschwelle aufweist. Somit können frühzeitig Anpassungen an dem Funknetzwerk vorgenommen werden.

Eine Weiterbildung der Erfindung sieht vor, dass einem bestimmten Zeitraum funknetzexterne Randparameter ermitteln und der Betriebskonstellation zugeordnet werden und die Randparameter durch den Zentralrechner bei der Erstellung des Modells berücksichtigt werden. Mit anderen Worten können einem bestimmten Zeitraum neben einem Ausfall und einer Betriebskonstellation auch funknetzexterne Randparameter zugeordnet werden. Funknetzexterne Randparameter können Werte umfassen, welche eine Randbedingung beschreiben unter denen das Funknetzwerk betrieben wird. Diese können beispielsweise Spannungsschwankungen einer Versorgungsspannung oder Wartungsarbeiten umfassen. Dadurch ergibt sich der Vorteil, dass auch Randbedingungen erfasst werden können, welche nicht direkt mit dem Funknetzwerk in Verbindung stehen, jedoch einen Einfluss auf die Ausfallwahrscheinlichkeit haben können. Es kann beispielsweise sein, dass ein Ausfall auf Wartungsarbeiten zurückgeführt werden kann, welche an einem Gerät durchgeführt wurden. Mittels des Randparameters kann das Modell den Ausfall hiermit und nicht mit der Betriebskonstellation des Zeitintervalls assoziieren.

Die Erfindung umfasst auch einen Zentralrechner, welcher zur Durchführung eines der Verfahren eingerichtet ist.

Zu der Erfindung gehören auch Weiterbildungen des erfindungsgemäßen Zentralrechners, die Merkmale aufweisen, wie sie bereits im Zusammenhang mit den Weiterbildungen des erfindungsgemäßen Verfahren beschrieben worden sind. Aus diesem Grund sind die entsprechenden Weiterbildungen des erfindungsgemäßen Zentralrechners hier nicht noch einmal beschrieben.

Im Folgenden sind Ausführungsbeispiele der Erfindung beschrieben. Hierzu zeigen:
- Fig. 1: eine schematische Darstellung eines Zentralrechners;
- Fig. 2: einen Verfahrensablauf, wie er durch den Zentralrechner durchgeführt werden kann; und
- Fig. 3: ein mögliches Modell zur Bestimmung einer Ausfallwahrscheinlichkeit.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

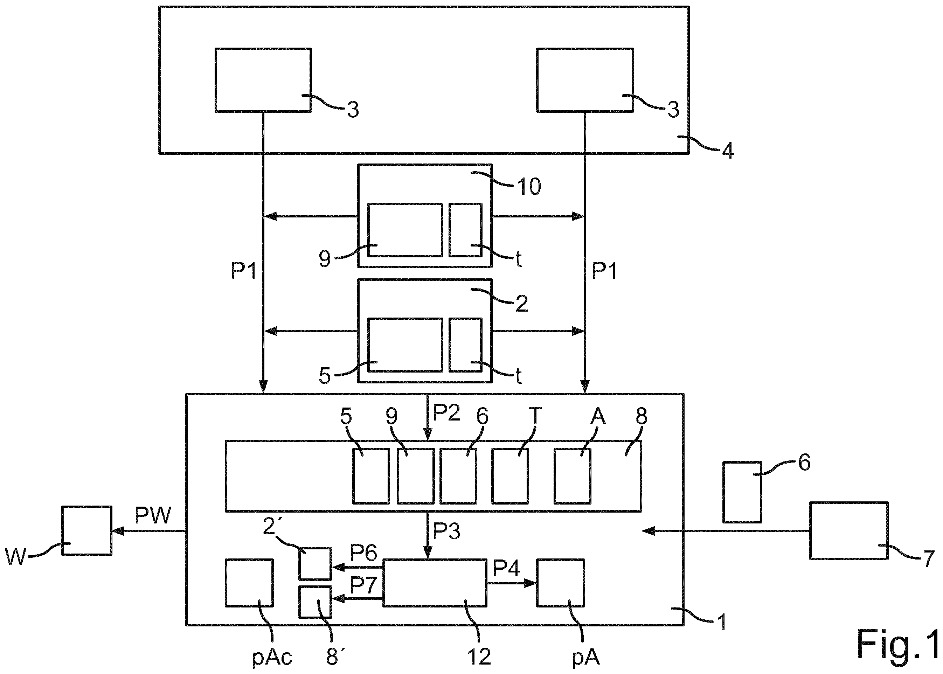

Fig. 1 zeigt einen Zentralrechner 1 an den zyklisch Betriebsparameter 2 von Geräten 3 eines Funknetzwerkes 4 übermittelt werden. Betriebsparameter 2 können Betriebswerte 5 und jeweilige Erfassungszeitpunkte t der Betriebswerte 5 umfassen. Ein Funknetzwerk 4 kann beispielsweise ein GSM-Funknetzwerk oder ein WLAN-Funknetzwerk sein Bei den Geräten 3 kann es sich beispielsweise um Zugangspunkte oder Repeater handeln, welche als Infrastrukturgeräte fungieren und um Endgeräte, wie beispielsweise Mikrocomputer oder Mikrocontroller, welche über ein geeignetes Funkmodul an das Funknetzwerk angebunden sind. Betriebsparameter 2 können Daten sein, welche ein jeweiliges Gerät 3 selbst, oder die Interaktion des Gerätes 3 mit dem Funknetzwerk 4 betreffen können. Dazu können beispielsweise die Empfangsleistung und/oder die Sendeleistung gehören. Der Zentralrechner 1 kann auch Randparameter 6 empfangen, welche von einer externen Sensoreinheit 7 erfasst wurden. Der Zentralrechner kann die in einem Zeitintervall T erfassten Betriebsparameter 2 und Randparameter 6 einer jeweiligen Betriebskonstellation 8 zuordnen. Somit stellt eine Betriebskonstellation 8 eine Momentaufnahme des Funknetzwerkes 4 in einem bestimmten Zeitintervall T dar. Einem solchen Zeitintervall T ist auch eine Information über den Vorliegen eines Ausfalls A zugeordnet. Ein Ausfall A kann beispielsweise ein Auftreten eines Indikationswertes 9 eines Indikationsparameters 10 in einem vorbestimmten Wertebereich 11 umfassen. Ein Indikationsparameter 10 kann ein Betriebsparameter 2 sein, welcher für ein ordnungsgemäßes Funktionieren des Funknetzwerkes 4 bestimmte Werte aufweisen muss. Der Zentralrechner 1 kann dazu eingerichtet sein, anhand der gespeicherten Daten ein Modell 12 zu erstellen, welches einer bestimmten Betriebskonstellation 8 eine Ausfallwahrscheinlichkeit pA zuordnet.

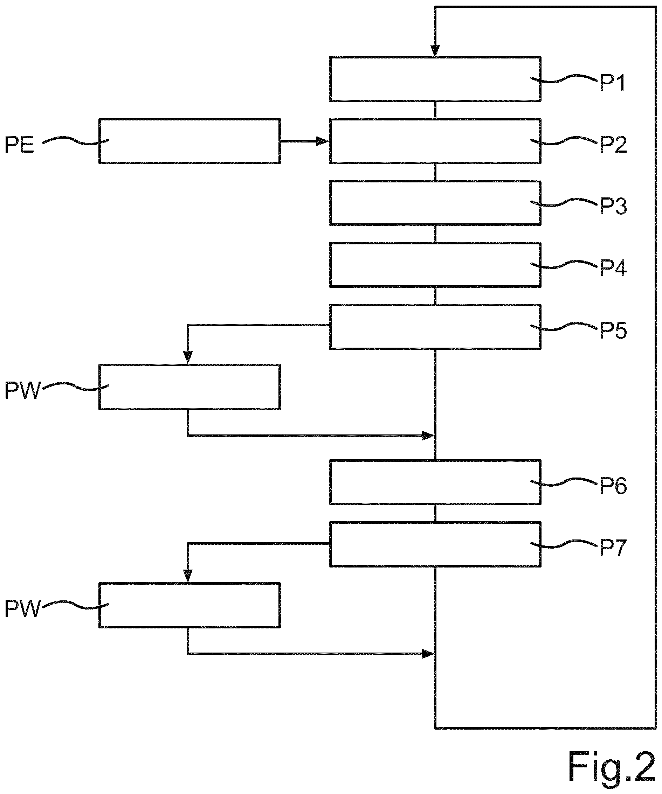

Fig. 2 zeigt einen möglichen Ablauf eines erfindungsgemäßen Verfahrens zur Bestimmung einer Ausfallwahrscheinlichkeit pA eines Funknetzwerkes 4. In einem Schritt P1 übermitteln Geräte 3 des Funknetzwerkes 4 zyklisch Betriebsparameter 2 an den Zentralrechner 1. In Schritt P2 speichert der Zentralrechner 1 die Betriebswerte 5 aller Betriebsparameter 2, welche in einem vorgegebenen Zeitintervall T erfasst wurden, als jeweilige Betriebskonstellation 8 ab und prüft das Funknetzwerk 4 auf ein Vorliegen eines Ausfalls A. Der Zentralrechner 1 kann auf Grundlage der gespeicherten Betriebskonstellationen 8 ein Modell 12, welches jeder möglichen Betriebskonstellation 8 eine Ausfallwahrscheinlichkeit pA zuordnet, erstellen P3. Der Zentralrechner 1 kann dazu eingerichtet sein, dass er für jede neue gespeicherte Betriebskonstellation 8 automatisch die Ausfallwahrscheinlichkeit pA berechnet P4. Es kann sein, dass ein Warnschwellwert pAc bezüglich der Ausfallwahrscheinlichkeit pA definiert ist. Es kann vorgesehen sein, dass der Zentralrechner 1 die berechnete Ausfallwahrscheinlichkeit pA für eine neue gespeicherte Betriebskonstellation 8 mit dem Warnschwellwert pAc vergleicht P5 und bei einer Überschreitung des Warnschwellwertes pAc ein Warnsignal W erzeugt PW . Es kann sein, dass durch den Zentralrechner 1 für jeden aktuellen Betriebsparameter 2 eine Differenz 2' ausgegeben wird, welche zu einer Überschreitung des Warnschwellwertes pAc bei ansonsten gleich bleibenden Betriebswerten 5 anderer Betriebsparameter 2 führen würde P6. Es kann sein, dass der Zentralrechner 1 mittels eines Extrapolationsverfahrens eine prognostizierte Betriebskonstellation 8' bestimmt P7 und im Fall einer Überschreitung der Ausfallwahrscheinlichkeit pAc für die prognostizierte Betriebskonstellation 8' ein Warnsignal W erzeugt PW.

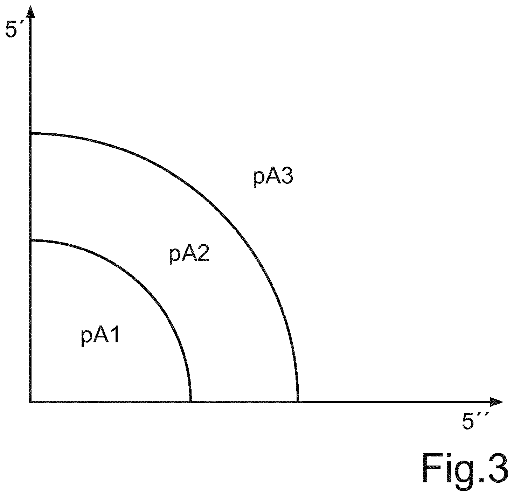

Fig. 3. zeigt ein mögliches Modell zur Bestimmung einer Ausfallwahrscheinlichkeit eines Funknetzwerkes. Dargestellt sind drei Bereiche pA1, pA2, pA3, welche drei verschiedene Ausfallwahrscheinlichkeit in Abhängigkeit von zwei Betriebswerten 5',5"beschreiben.

Insgesamt zeigen die Beispiele, wie durch die Erfindung ein Verfahren zur Überwachung einer Ausfallwahrscheinlichkeit eines Funknetzwerkes bereitgestellt wird.

## Patentansprüche

1. Verfahren zur Erfassung und Bestimmung einer Ausfallwahrscheinlichkeit (pA) eines Funknetzwerkes (4), wobei
a. aus Geräten (3) des Funknetzwerkes (4) zyklisch Betriebsparameter (2) durch einen Zentralrechner (1) empfangen werden und über einen Zugang bereitgestellt werden, wobei
jeder übermittelte Betriebsparameter (2) einen Betriebswert (5) des jeweiligen Gerätes (3) und einen Erfassungszeitpunkt t des Betriebswerts (5) umfasst (P1), und
b. der Zentralrechner (1) zyklisch die innerhalb eines jeweils vorgegebenen Zeitintervall (T) erfassten Betriebswerte (5) aller Betriebsparameter (2) als jeweilige Betriebskonstellation (8) speichert und ein das Funknetzwerk (4) auf ein Vorliegen eines Ausfalls (A) überprüft (P2),
**dadurch gekennzeichnet, dass**
c. der Zentralrechner zyklisch auf Grundlage der gespeicherten Betriebskonstellationen (8) und Ausfälle (A) ein Modell (12) erstellt, welches jeder möglichen Betriebskonstellation (8) eine Ausfallwahrscheinlichkeit (pA) zuordnet (P3),
d. der Zentralrechner (1) die Ausfallwahrscheinlichkeit (pA) für jede neue gespeicherte Betriebskonstellation (8) berechnet,
e. der Zentralrechner (1) die Ausfallwahrscheinlichkeit (pA) mit einem vorbestimmten Warnschwellwert (pAc) vergleicht (P5) und bei einer Überschreitung des Warnschwellwertes (pAc) ein Warnsignal (W) erzeugt (PW), und
f. für jeden aktuellen Betriebsparameter (2) eine Differenz (2') ausgegeben wird (P6), welche zu einer Überschreitung des Warnschwellwertes (pAc) bei ansonsten gleich bleibenden Betriebswerten (5) anderer Betriebsparametern (2) führen würde.

2. Verfahren nach Anspruch 1, **dadurch gekennzeichnet, dass** ein Ausfall (A) zumindest ein Auftreten eines Indikationswertes (9) zumindest eines Indikationsparameters (10) umfasst.

3. Verfahren nach einem der vorhergehenden Ansprüche, **dadurch gekennzeichnet, dass** das Modell (12) zur Zuordnung einer Ausfallwahrscheinlichkeit durch eine Korrelation der Betriebskonstellationen (8) mit den jeweils aufgetretenen Ausfällen (A) mittels eines Mustererkennungsalgorithmus erzeugt wird.

4. Verfahren nach einem der vorhergehenden Ansprüche, **dadurch gekennzeichnet, dass** der Zentralrechner (1) mittels Extrapolationsverfahren eine prognostizierte Betriebskonstellation bestimmt (P7) und bei einer Überschreitung des Warnschwellwertes bei der prognostizierten Betriebskonstellation ein Warnsignal (W) erzeugt (PW).

5. Verfahren nach einem der vorhergehenden Ansprüche, **dadurch gekennzeichnet, dass** einem bestimmten Zeitraum (T) funknetzexterne Randparameter (6) zugeordnet werden, welche durch den Zentralrechner bei der Erstellung des Modells berücksichtigt werden und von externen Sensoren (7) erfasst werden (PE).

6. Zentralrechner (1),
eingerichtet zur Durchführung eines der vorhergehenden Verfahren.

## Claims

1. Method for detecting and determining a failure probability (pA) of a radio network (4), wherein
a) from devices (3) of the radio network (4), cyclical operational parameters (2) are received by a central computer (1) and made available via an input,
wherein
each transmitted operational parameter (2) comprises (P1) an operating value (5) of the respective device (3) and a detecting point in time t of the operating value (5), and
b) the central computer (1) saves in a cyclical manner the operating values (5) of all operational parameters (2) detected within a respectively predetermined time interval (T) as a respective operational constellation (8) and checks (P2) a the radio network (4) for the presence of a failure (A),
**characterised in that**
c) on the basis of the stored operational constellations (8) and failures (A), the central computer generates in a cyclical manner a model (12) which assigns (P3) a failure probability (pA) to each possible operational constellation (8),
d) the central computer (1) calculates the failure probability (pA) for each new saved operational constellation (8),
e) the central computer (1) compares (P5) the failure probability (pA) with a predetermined warning threshold value (pAc) and, if the warning threshold value (pAc) is exceeded, generates (PW) a warning signal (W), and
f) for each current operational parameter (2) is output (P6) a difference (2') which would result in an exceeding of the warning threshold value (pAc), should the operating values (5) of other operational parameters (2) otherwise remain the same.

2. Method according to claim 1, **characterised in that** a failure (A) comprises at least one occurrence of an indication value (9) of at least one indication parameter (10).

3. Method according to any of the preceding claims, **characterised in that** the model (12) for assigning a failure probability by means of a correlation of the operational constellations (8) with the respectively occurring failures (A) is generated by means of a pattern recognition algorithm.

4. Method according to any of the preceding claims, **characterised in that** the central computer (1) determines (P7) by means of extrapolation methods a predicted operational constellation and, if the warning threshold value is exceeded in the predicted operational constellation, generates (PW) a warning signal (W).

5. Method according to any of the preceding claims, **characterised in that** boundary parameters (6) outside the radio network are assigned to a specific time duration (T), which boundary parameters are taken into consideration by the central computer when generating the model and are detected (PE) by external sensors (7).

6. Central computer (1),
configured to carry out any of the preceding methods.

## Revendications

1. Procédé pour détecter et déterminer une probabilité de défaillance (pA) d'un réseau radio (4), dans lequel
a. des paramètres de fonctionnement (2) provenant d'appareils (3) du réseau radio (4) sont reçus cycliquement par un ordinateur central (1) et sont mis à disposition par l'intermédiaire d'un accès,
dans lequel
chaque paramètre de fonctionnement (2) transmis comprend) (P1) une valeur de fonctionnement (5) de l'appareil respectif (3) et un point de temps de détection t de la valeur de fonctionnement (5), et
b. l'ordinateur central (1) enregistre cycliquement les valeurs de fonctionnement (5) détectées de tous les paramètres de fonctionnement (2) au sein d'un intervalle de temps (T) prédéterminé respectif en tant que constellation de fonctionnement (8) respective et vérifie (P2) la présence d'une défaillance (A) dans le réseau radio (4),
**caractérisé en ce que**
c. l'ordinateur central génère cycliquement, sur la base des constellations de fonctionnement (8) et défaillances (A) enregistrées, un modèle (12) qui attribue (P3) une probabilité de défaillance (pA) à chaque constellation de fonctionnement possible (8),
d. l'ordinateur central (1) calcule la probabilité de défaillance (pA) pour chaque nouvelle constellation de fonctionnement (8) enregistrée,
e. l'ordinateur central (1) compare (P5) la probabilité de défaillance (pA) avec une valeur seuil d'avertissement (pAc) prédéterminée et génère (PW) un signal d'avertissement (W) en cas de dépassement de la valeur seuil d'avertissement (pAc), et
f. une différence (2') est émise (P6) pour chaque paramètre de fonctionnement (2) actuel qui conduirait à un dépassement de la valeur seuil d'avertissement (pAc) si les valeurs de fonctionnement (5) d'autres paramètres de fonctionnement (2) restent autrement constantes.

2. Procédé selon la revendication 1, **caractérisé en ce qu'**une défaillance (A) comprend au moins une occurrence d'une valeur d'indication (9) d'au moins un paramètre d'indication (10).

3. Procédé selon l'une quelconque des revendications précédentes, **caractérisé en ce que** le modèle (12) pour l'attribution d'une probabilité de défaillance est généré par une corrélation des constellations de fonctionnement (8) avec les défaillances respectives survenues (A) au moyen d'un algorithme de reconnaissance de motif.

4. Procédé selon l'une quelconque des revendications précédentes, **caractérisé en ce que** l'ordinateur central (1) détermine (P7) une constellation de fonctionnement prédite au moyen d'un procédé d'extrapolation et génère (PW) un signal d'avertissement (W) en cas de dépassement de la valeur seuil d'avertissement dans la constellation de fonctionnement prédite.

5. Procédé selon l'une quelconque des revendications précédentes, **caractérisé en ce que** des paramètres de limite (6) externe au réseau radio sont affectés à une période de temps (T) déterminée, lesquels sont pris en compte par l'ordinateur central lors de la création du modèle et qui sont détectés (PE) par des capteurs externes (7).

6. Ordinateur central (1),
configuré pour exécuter l'un des procédés précédents.
